# EUROPEAN PATENT APPLICATION

(11) **EP 4 283 213 A1**
(43) Date of publication of application: **29.11.2023**
(21) Application number: 22175111.8
(22) Date of filing: 24.05.2022
(51) Int. Cl.: F24S 20/50, F24S 25/70, H02S 10/40, H02S 30/20

(54) **A MOBILE SOLAR ENERGY CAPTURING MODULE**

(71) Applicant: Real Verhuur, 9170 Sint-Gillis-Waas (BE)
(72) Inventor: Schepens, Christophe Joanna André, 2000 Antwerpen (BE); Saman, Mathijs, 9190 Stekene (BE)
(74) Representative: IP HILLS NV

(57) **Abstract**

A mobile solar energy capturing module (100) suitable to be part of a mobile work- or living space is provided. The module (100) comprises one or more solar energy capturing units (110) and a frame (200) for holding these one or more solar energy capturing units (110). The frame (200) defines a volume. The one or more solar energy capturing units (110) is moveably fixed to the frame (200), the one or more solar energy capturing units (110) are moveable between at least a first and a second position. The one or more solar energy capturing units (100), when being in their first position, are enclosed within the volume.

## Description

### Field of the Invention

The present invention generally relates to mobile solar energy capturing modules for use as a part of a moveable work- and/or living space.

### Background of the Invention

Moveable work- and/or living space are known, and typically comprises one or a plurality of building modules. Such modules are mounted one adjacent and/or on top of the other in order to provide a moveable work- and/or living space, e.g. for temporarily housing, as temporarily offices at construction sites, an many more uses.

An example of such building module is given in DE202009002015U1.

The safety and environmental requirements for such temporarily work- and/or living space, like EPB legislation, become more and more difficult, if not impossible, to be met. In particularly the temporarily work- and/or living spaces need to be as energy neutral as possible.

### Summary of the Invention

It is an object of some embodiments of the invention to provide moveable work- and/or living spaces which can meet the present safety and environmental requirements, like in Belgium being BEN ("bijna energie neutraal"). It is an object of some embodiments of the invention to provide moveable work- and/or living space with an improved energy independency, i.e. which space is more energy neutral. It is an object of the invention to provide mobile solar energy capturing modules suitable, i.e. fit, to be part of such moveable work- and/or living spaces, which modules can be transported easily and/or more safely, and/or can be installed easily, quickly and/or more safely.

According to a first aspect a mobile solar energy capturing module suitable to be part of a mobile work- or living space is provided. The module comprises one or more solar energy capturing units and a frame for holding these one or more solar energy capturing units. The frame defines a volume. The one or more solar energy capturing units is moveably fixed to the frame, the one or more solar energy capturing units are moveable between at least a first and a second position. The one or more solar energy capturing units, when being in their first position, are enclosed within the volume.

The one or more solar energy capturing units are enclosed within the volume defined by the frame means that the top surface or top or upper point of the one or more solar energy capturing units are positioned lower than the top plane defined by the top of the frame. The bottom surface or lowest point of the one or more solar energy capturing units are positioned higher than the bottom plane defined by the bottom of the frame. The one or more solar energy capturing units are enclosed within the volume defined by the frame means that the one or more solar energy capturing units fit inside the frame.

According to some embodiments, the mobile solar energy capturing module may comprise at least two solar energy capturing units, e.g. 3, 4, 5, 6 or even more solar energy capturing units, being distributed, optionally evenly distributed, over the top face of the volume defined by the frame. The at least two solar energy capturing units, e.g. 3, 4, 5, 6 or even more solar energy capturing units may all be coplanar when positioned in their first position. the at least two solar energy capturing units, e.g. 3, 4, 5, 6 or even more solar energy capturing units may all be linearly aligned one adjacent to the other, or may be matrix-like aligned, one unit being adjacent to other units. When all solar energy capturing units are positioned in their first position, they all together are enclosed within said volume. Preferably adjacent units are free from contacting each other.

When several frames, each including one or more solar energy capturing units, are stacked one to the other, the solar energy capturing units from different modules will not contact one another. By stacking several of such frames, hence mobile solar energy capturing modules, the solar energy capturing units from different adjacent mobile one or more solar energy capturing modules can be stacked on trailers for transporting the stack of modules, with limited or even without the risk that the solar energy capturing units come in contact during stacking and transport.

The one or more solar energy capturing units can be brought in a second position, in which preferably the one or more solar energy capturing units are inclined in view of the top plane defined by the top of the frame. As such the one or more solar energy capturing units can capture more efficiently the incident sunlight and converts it into solar energy, like electrical current via PV cells or heated liquid, such as heated glycol, like propylene glycol, or heated aqueous liquid comprising anti-freeze additive, used to heat water in a solar boiler.

The mobile solar energy capturing module may comprise more than one, like a plurality of solar energy capturing units, the solar energy capturing units. These solar energy capturing units may be similar or even identical one to the other.

According to some embodiments, one or more solar energy capturing units may comprise one or more PV module or modules. The one or more solar energy capturing units may each be a PV module. Each PV module may comprise one or more PV cells, also referred to as solar cells or PV solar cells. These PV modules may be similar or even identical one to the other. The PV cells and PV modules may be part of a PV system, further comprising amongst others a current storage or battery. The different PV cells of each PV module may be electrically coupled or switched as known in the art. Also the different PV modules may be electrically coupled or switched as known in the art.

The one or more solar energy capturing units may comprise one or more solar collector or collectors for heating liquid by sunlight. The one or more solar energy capturing units may each be a solar collector for heating liquid by sunlight. The one or more solar collectors may be part of a solar boiler or solar water heater. These solar collectors may be similar or even identical one to the other.

According to some embodiments, the volume has a top and a bottom face. The solar energy capturing side of the unit or units is preferably oriented away from the top and bottom face when said unit is in its first position.

According to some embodiments, the volume may be a cylinder, such as a right cylinder, being a solid object with two identical flat ends having a curved perimeter, and one curved side between said flat ends.

The volume, i.e. the volume defined by the frame, preferably by the profile of the frame, may be a prism. A prism is a polyhedron comprising an n-sided polygon base or bottom face, a second base or top face which is a translated copy (rigidly moved without rotation) of the first, and n other faces, being side faces, necessarily all parallelograms, joining corresponding sides of the two bases. The two bases each comprise n vertices, each vertex of the one base being paired, i.e. connected, to a corresponding vertex at the other base by means of an edge.

This volume may be a right prism comprising at least three vertices at the top face of the prism and three vertices at the bottom face of the prism.

A right prism is a prism where the joining edges and faces are perpendicular to the base faces, i.e. the top face and the bottom face

At least one vertices at the top face of the prism may be provided with a lifting means.

The lifting means may be located at the inner side of the frame, i.e. oriented inwards the volume the frame defines.

Optionally at least two or three lifting means are provided, and preferably in two or three vertices at the top face of the prism. The lifting means may not contact, hence will be free of contact with, the solar energy capturing unit or units from the mobile solar energy capturing module positioned on top of the mobile solar energy capturing module the lifting means are part of.

Preferably a void space or void spaces at the bottom face of the volume are provided and adapted to receive all lifting means of an identical module positioned under the module.

Preferably all vertices at the top face of the prism are provided with a lifting means. All lifting means may be similar or even identical.

The lifting means may be provided as a hook of a bar, like a hook provided by a metal, like steel, bar. Alternatively, the lifting means may be a plate, like a metal, e.g. steel plate, in which at least one, like one opening, an eye, is provided. The lifting means may be provided as a fin extending above the frame, the plane of the fin being about perpendicular, e.g. perpendicular to the top face. The lifting means may be provided as a fin extending above the frame, the fin bisecting the angle of the frame it is connected to.

The upper side of the fin may be provided as a guiding curve, adapted to guide the frame, e.g. vertices of a frame being positioned above the frame, to the corresponding position on the frame, where two modules are positioned one on top of the other. The guiding curve may be a continuous line, continuously decreasing in height from the top point of the lifting means towards the frame the loading means is connected to. This facilitates the positioning of identical or similar modules in a stacked configuration. The lifting means of the lower module, which themselves were used to lift this lower module, will receive the frame of the adjacent upper module, and guide the vertices the bottom of the frame, hence the module, to the stacking position of this second module on the lower module, and this without interference of a workman. Once the modules are stacked, the lifting means will contribute to the stability of the stack of modules. Such lifting means facilitate easy stacking of several mobile solar energy capturing modules, e.g. on a transporting trailer.

Most preferably, the volume is a rectangular cuboid. Preferably the rectangular cuboid, i.e. a cuboid having a top and bottom face being a rectangle, has a rectangular top and bottom face with a length, i.e. the large side of the rectangle, in the range of 3 to 12 m, such as in the range of 4 to 10 m and a width, i.e. the short side of the rectangle, in the range of 1 to 5 m, such as in the range of 2 to 4 m. The height of the rectangular cuboid preferably is in the range of 0,05 to 0,90 m, such as in the range of 0,1 to 0,5 m.

The mobile solar energy capturing module having such dimensions may easily be installed on top of a building module of a mobile work- or living space, as the dimensions of the rectangular face may fit to the roof frame of the building module.

This rectangular cuboid volume may be defined by four profiles defining four side faces of the rectangular cuboid.

These four faces are the side faces of the rectangular cuboid comprising the edges, hence defining the height of the rectangular cuboid. The two other faces, the top face and the bottom face, are preferably open faces or open planes. The one or more solar energy capturing units may preferably be positioned between these two open faces or planes, i.e. not having any point being part of one of the open faces. Preferably the minimum distance between the highest point of the one or more solar energy capturing units being in said first position and the open plane or face at the top of the rectangular cuboid is in the range of 5 to 50mm. Preferably the minimum distance between the lowest point of the one or more solar energy capturing units being in said first position and the open plane or face at the bottom of the rectangular cuboid is in the range of 5 to 50mm.

Preferably the rectangular cuboid volume further comprises an open upper face, the frame comprises profiles having a first flank being coplanar with the open upper face.

These first flanks of the profiles preferably provide a load surface which is adapted to receive the load of one or more mobile solar energy capturing modules being stacked to the mobile solar energy capturing unit.

This rectangular cuboid volume further may comprise an open lower face, the frame comprises profiles having a second flank being coplanar with the open lower face.

These second flanks of the profiles preferably provide a support surface which is adapted to provide the supporting surface of the mobile solar energy capturing unit when being stacked to an underlaying mobile solar energy capturing modules.

The rectangular cuboid volume further may comprise an open upper face and an open lower face, the frame comprises profiles having a first flank being coplanar with the open upper face and second flank being coplanar with the open lower face, said first and second flank being parallel, the first flank of the profile being adapted to contact the second flank of a profile of an identical mobile solar energy capturing module being stacked to said first flanks.

The frame may be provided from one or a number of profiles. A profile, such as a steel profile, is a product which have been shaped, like plied, rolled, drawn, extruded or pressed, into a shape which is of the same cross-section over its entire length. A profile has a central axis which is perpendicular to the plane forming the cross-section.

The profiles may be a polymeric or metal profiles, preferably being a steel profiles. A metal profile may be an extruded profile or a hot or cold rolled metal profile, most preferably a cold rolled steel profile. Hence the profile may have a cross-section in radial direction, which cross-section is a solid profile, or a filled profile, filled with material. The metal profile may be an extruded profile or a hot or cold rolled metal profile, most preferably a cold rolled steel profile, whose internal void is partially or completely filled.

The profile may be a tubular profile. Hence the profile may be an unfilled profile, i.e. having a cross-section in radial direction, which cross-section has a perimeter encompassing a void. The filled or unfilled profile may be a closed profile, i.e. the cross -section is free of openings or interruptions along its perimeter, or may be an open profile, i.e. the cross -section is having an opening or interruption along its perimeter.

Preferably, the profile is a cold rolled steel profile, provided from a steel sheet having a thickness in the range of 1 to 6 mm, such as in the range of 2 to 5 mm. The steel alloy used is preferably chosen from the group consisting of xx structural steels. The outer surfaces, also referred to as flanks, of the profile, or even all surfaces of the profile, may be coated with a corrosion retarding or preventing coating. The outer surfaces of the profile, or even all surfaces of the profile, optionally on top of the corrosion retarding or preventing coating, may be provided with any other coating, like a decorative coating.

Possibly the profile may be a rectangular or square tube, or an I-profile, a sigma profile, an omega profile or alike.

Preferably all profiles used to define the perimeter of the frame are identical.

At the point where two profiles of a frame connect, the connection or joint between the two profiles may be provided as a mitre joint, i.e. a joint made between two profiles at a defined angle, such as an angle of 90°, such that the line of junction bisects this angle. Alternatively, a joining means may be used to connect the two outer ends of the two profiles on to the other. Such joining means may e.g. be a corner, like a steel corner, e.g. an IS01161 corner castings.

The first flank of the profile may have a flank being substantially parallel to the top face of the frame. Substantially parallel means that the plane of the flank and the plane of the top face of the frame are parallel within normal tolerances during construction. Though the angle between these planes is aimed to be 0°, an angle of plus or minus 2° is understood as substantially parallel.

The frame, more particular the top face of the frame, provides the top of the module. A building module according to claim 1, wherein the top surface of the at least one element is fixed to the first flank.

According to some embodiments, the profile may have a tubular cross section. The tubular cross-section may be open or closed.

Preferably the frame comprises a profile having an L-shaped cross section. A first and second flank are the flanks making the inner corner of the L-shaped cross-section. The L-shape may have two legs of equal length, however an L-shape with a long leg and a short leg is preferred. More preferably the first flank is part of the short leg, the second flank is part of the long leg. The thickness of the legs may be equal or different one from the other. More preferred, an L-shape with a long leg and a short leg, the first flank is part of the short leg, the second flank is part of the long leg, and the short leg having a larger thickness as compared to the long leg, is preferred.

Preferably the L-shaped cross-section is a tubular L-shaped cross-section, i.e. the inner volume delimited by the flanks of the L-shape is unfilled. The L-shape may be delimited by, in sequential order end in counter-clockwise direction round the axis of the profile, the first flank providing the downwards oriented lower side of the L-shape, a first outer flank defining the end of the first leg of the L-shape, a third flank provides the upper side of the profile, a fourth side providing the outer side of the profile and a second outer flank defining the end of the second leg of the L-shape. Between each consecutive flank, a corner is provided, for which the smallest angle between the consecutive flanks being all in the range of 60° to 130°, such as in the range of 60 to 120°, and most preferably are all about 90°.

Possibly the L-shaped profile is a cold rolled profile, made from a metal, like a steel, plate. The plate may be rolled in such a way that the outer borders of the plate are meeting and may be welded to each other at one of the corners of the L-shape. Most preferably this welding is provided in the corner defined by the first outer flank defining the end of the first leg of the L-shape and the third flank providing the upper side of the profile, or in the corner defined by the fourth side providing the outer side of the profile and the second outer flank defining the end of the second leg of the L-shape. As such a closed tubular cross-section may be provided.

Alternatively profile is a cold rolled profile, made from a metal, like steel, plate. Possibly the profile is an L-shaped profile. The plate may be rolled in such a way that the outer borders of the plate provide the endpoints of the first and second flank, these endpoints being oriented towards the corner these two flanks make. The endpoints of the first and second flank may be meeting and may be welded to each other. As such a closed tubular cross-section may be provided. Alternatively these endpoints may be spaced apart and not interconnected, as such providing an open tubular cross section.

Hence the first and second flank may not be interconnected along the corner they form, i.e. free of contact along the corner they form.

According to embodiments, the L-shape being delimited by, in sequential order end in counter-clockwise direction round the axis of the profile, a first flank providing the downwards oriented lower side of the inwards oriented corner, a second flank defining the end of the first leg of the L-shape, a third flank provides the upper side of the profile, a fourth side providing the outer side of the profile, a fifth outer flank defining the end of the second leg of the L-shape and a sixth flank providing the sideways oriented lower side of the inwards oriented corner, the frame defines a volume being a right prism a top face and a bottom face, the third flank being coplanar with the top face and the fifth flank being coplanar with the bottom face

The L-shaped profile may be used such that the first flank providing the downwards oriented lower side of the inwards oriented corner, is oriented downwards the frame and the sixth flank providing the sideways oriented lower side of the inwards oriented corner is oriented inwards the frame.

Between each consecutive flank of the L-shaped profile, a corner is provided, for which the smallest angle between the consecutive flanks being all in the range of 60° to 120°, and most preferably are all about 90°.

The solar energy capturing units may be mount in and to the frame by additional support elements, like profiles and bars or a support grid. One or more subframes or support grids may be mounted within the frame, having the possibility to hinge in a direction perpendicular or angled in reference to the flanks of the frame under an angle of 1° to 90°, such as in the range of 5° to 75°. Manual, mechanical, or automated lifting devices can be incorporated. Hoisting or lifting means to allow external lifting by a lifting device is also a possibility. Optionally, the solar energy capturing units may be provided with positioning means allowing rotation of each or some of the solar energy capturing units, either together or individually, around one or a plurality of axis. Possibly the mobile solar energy capturing module may comprise control means to automatically steer and adjust the orientation of the some of the solar energy capturing units in function of the moment of the day, the position of the sun and/or the solar energy provided to the some of the solar energy capturing units.

In case of an L-profile being used to provide the frame, these additional support elements may be coupled, permanently fixed or moveably fixed, to the first flank providing the downwards oriented lower side of the inwards oriented corner, and/or the sixth flank providing the sideways oriented lower side of the inwards oriented corner. In case of an L-profile being used to provide the frame, these additional support elements may be coupled to the flanks of the profile defining the inwards oriented corner of the L-shaped profile.

The solar energy capturing units may be brought from its first position inside the frame, to at least a second position. The solar energy capturing units, when being positioned in the second position, may be rotated round an axis coplanar to the one of the open faces of the frame.

The solar energy capturing unit or units may have a front planar face, the angle between front planar face or faces and the one of the open faces of the frame to which the axis is coplanar to, is in the range of 5 to 45°. This angle is the smallest angle measurable between the faces. The solar energy capturing side of the unit or units is preferably oriented away from the open faces of the frame to which the axis is coplanar to.

The solar energy capturing units may be brought from its first position inside the frame, to at least a second position by rotating around an axis perpendicular to the one of the open faces of the frame.

The solar energy capturing unit or units may be rotatable around an axis coplanar to the one of the open faces of the frame and/or are rotatable around an axis perpendicular to the one of the open faces of the frame.

Possibly the solar energy capturing unit or units may be subjected to a translation when being brought from the first to the second position. The translation may have a translation direction perpendicular to the one of the open faces of the frame.

Possibly the solar energy capturing unit or units may be positioned in more than two positions. The solar energy capturing unit or units may change position stepwise or continuously during use of the solar energy capturing unit or units when capturing solar energy.

As such the mobile solar energy capturing module may generate energy, like electrical energy or heat energy, during use, e.g. when being placed on top of a mobile work- or living space. Such mobile work- or living space may comprise a plurality of building modules positioned one on top and/or adjacent sideways to each other. One mobile solar energy capturing module may be dimensioned such it fits to the roof frame of one building module. Optionally the roof frame of the building module and the frame of the mobile solar energy capturing module may be provided from similar or even identical profiles. The work- and/or living spaces according to the invention may be used in moveable classrooms, installations for childcare, hospitals, student rooms, sanitary facilities, offices, home offices, kangaroo houses, private houses, overnight spaces in holiday parks, as offices, sanitary rooms and/or workplaces and storage places on construction sites, and alike.

According to a second aspect of the invention, a mobile work- or living space is provided, the mobile work- or living space comprising one or a plurality of upper building modules, being free of a building module positioned on top of said building module, at least one, possibly some or even all of said upper building modules being provided on its roof side with one mobile solar energy capturing module according to the first aspect of the invention.

A mobile work- or living space may also comprise one or a plurality of vertically adjacent building modules, the upper of said building modules being provided on its roof side with a mobile solar energy capturing module according to the first aspect of the invention.

The mobile work- or living space may further comprise an energy storage means to store the solar energy, e.g. an electrical battery and/or a boiler for storing heated water. Obviously, the mobile work- or living space may further comprise means to use the stored or generated energy, which means are known in the art. As such, a mobile work- or living space may be provided which is energy neutral, or even may be able to provide additional energy, like electrical energy, to the grid or to the environment the mobile work- or living space is provided to. As an example a mobile work- or living space provided as offices, sanitary rooms and/or workplaces and storage places on construction sites may generate electrical energy to be consumed on said construction site. Heated water, obtained from solar collectors being part of a solar boiler or solar water heater, may be used to heat the building modules, and/or can be consumed as heated water in bathing or showering facilities places in such building modules.

The mobile work- or living space may e.g. comprise one building module dedicated to house devices being part of the solar energy capturing system the mobile solar energy capturing module or modules are part of. As an example in case the solar energy capturing system comprises PV modules, such dedicated building module may comprise one or more electrical batteries, a converter to convert the electrical energy stored or provided from DC to AC, being 2-phase AC or 3-phase AC, e.g. 2-phase 220V or 230V AC, or 3-phase 220V or 380V AC, one or more fuses, a means to couple the system to the grid, and alike. As another example, in case the solar energy capturing system comprises liquid heating modules, such dedicated building module may comprise a hot water boiler, one or more pumps, one or more expansion vessels, and alike. As another example, in case the solar energy capturing system comprises liquid heating modules and PV modules, such dedicated building module may comprise combinations of the above mentioned elements.

### Brief Description of the Drawings

Fig. 1 illustrates schematically a mobile solar energy capturing module for which solar energy capturing units are in their first position.
Fig. 2 illustrates schematically the same mobile solar energy capturing module as in figure 1, where the solar energy capturing units are in their second position.
Fig. 3 illustrates schematically a top view of the same mobile solar energy capturing module as in figure 1.
Fig. 4 and Fig. 5 illustrate schematically a cross section of the profile used to provide the frame of the mobile solar energy capturing module of figures 1 to 3.
Fig. 6 illustrates schematically two mobile solar energy capturing modules of figure 1, stacked one on the other.
Fig. 7 illustrates schematically a mobile solar energy capturing modules of figure 1, stacked on a mobile building module of a mobile work- or living space.
Fig. 8 and 9 illustrate schematically a mobile work- or living space comprising a plurality of mobile building modules, some of which being provided with mobile solar energy capturing modules of figure 1.

The same reference signs refer to the same, similar or identical features in the different figures.

### Detailed Description of Embodiment(s)

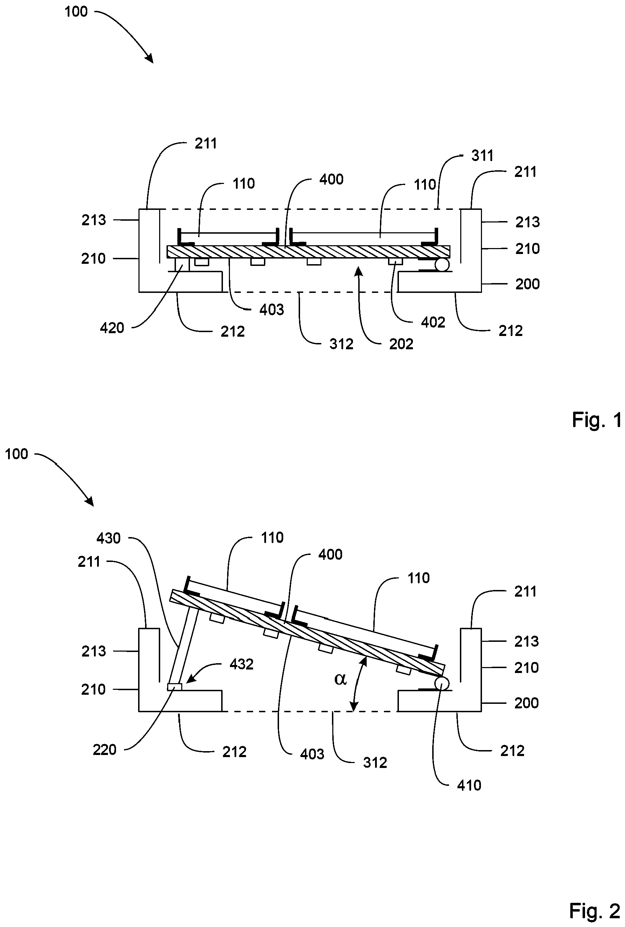

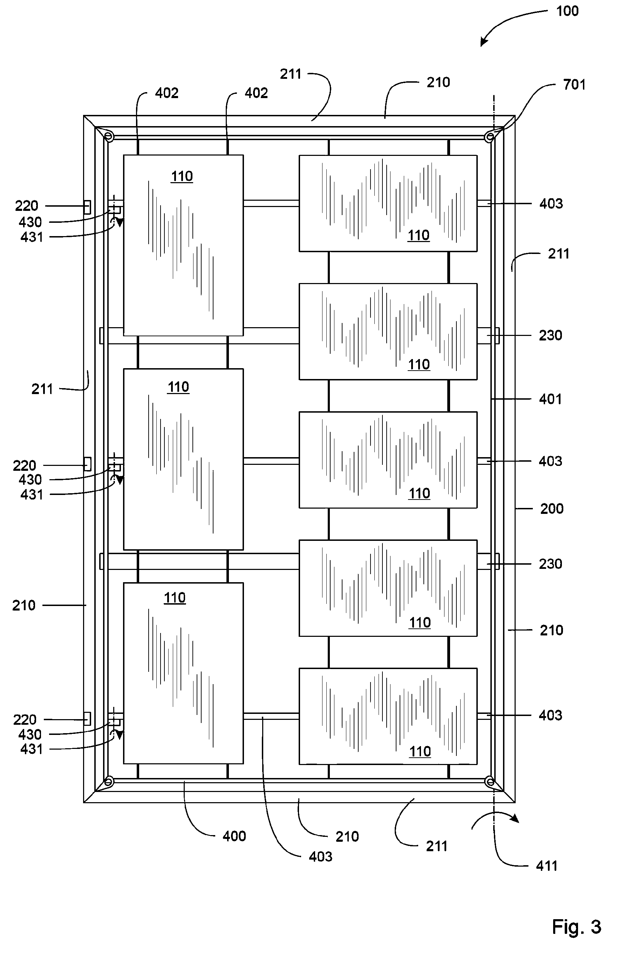

A mobile solar energy capturing module 100 suitable to be part of a mobile work- or living space 1 is shown in figure 1, figure 2 and figure 3. Figures 1 and 3 show the solar energy capturing units 110 in its first position, whereas figure 2 shows the solar energy capturing units 110 in their second position.

The module 100 comprises a plurality of in this embodiment coplanar, solar energy capturing units 110 and a frame 200 for holding the solar energy capturing units 110. The frame 200 defines a volume 202. The frame comprises outer frame profiles 210, in this embodiment cold rolled steel profiles having an upper flank 211 and a lower flank 212. Four identical profiles 210 are connected to each other forming a rectangular frame 200. The four profiles 210, in the four corners of the rectangle, are preferably connected one to the other using a mitre joint. The lower flanks 212 define a lower plane or bottom plane 312, in which the lower flanks 212 are coplanar. The upper flanks 211 define an upper plane or top plane 311, in which the upper flanks 211 are coplanar. The volume 202 defined by the frame 210 is delimited by the outer flanks 213 of the four profiles 210 and the two planes 311 and 312. The two planes 311 and 312 are in this embodiment parallel. The volume 202 is a cuboid volume. The two profiles 210 providing the long sides of the frame 200, may be interconnected by means of additional beams 230, in this embodiment two additional beams 230 being hollow tubular profiles. The additional beams 230 may extend through the profiles 210 and as such provide openings at the outer side of the frame 200. These openings may serve as forklift pockets or means to allow the module to be lifted by forklifts.

As an alternative, the additional beams 230 are provided under the profiles 210. The lower sides of the additional beams 230 in that case define the bottom plane of the frame.

The solar energy capturing units 110 are moveably fixed to the frame 200, i.e. the solar energy capturing units 110 may move relative to the frame 200, while remaining connected to the frame 200.

The solar energy capturing units 110 are moveable between at least a first position, which is shown in figure 1, and a second position shown in figure 2. The solar energy capturing units 110 being in their first position, are enclosed within said volume 202, i.e. all elements of the solar energy capturing units 110 are sunken hence encompassed by the outer surfaces of the cuboid volume 202. The minimum distance between the highest point of the solar energy capturing units 110 being in said first position, in this case the coplanar top surfaces solar energy capturing units 110 of the and the top plane 311 at the top of the rectangular cuboid volume 202 is in the range of 5 to 50 mm.

In one example, the solar energy capturing units 110 are PV modules, each comprising a plurality of PV cells. In another example, the solar energy capturing units 110 are solar collectors for heating liquid by sunlight. In a further example, some solar energy capturing units 110 are PV modules, while the others are solar collectors for heating liquid by sunlight. In the embodiment shown in figures 1 to 3, 8 solar energy capturing units 110 are positioned on the support grid 400. It is clear that another layout, with e.g. less but larger, or more but smaller solar energy capturing units 110 may be used according to the needs of the end use.

The solar energy capturing units 110 are installed in a coplanar way on a support means, in this embodiment a support grid 400, as best shown in figure 3. The support grid 400 comprises a support frame 401, having a rectangular perimeter and fitting in the perimeter of the frame 200. The support grid further comprises support beams 402 in the direction parallel to the long side of the rectangle, and support beams 403 in the direction parallel to the short side of the rectangle. The solar energy capturing units 110 are mounted and fixed to the support beams 402 and/or 403.

At one side of the support frame 401, preferably at one of the long sides of the frame 200, the support frame 401 is hingedly connected to the profile 210 of the frame 200. A set of hinges 410 are used. The support grid 400, and the solar energy capturing units 110 connected to it, may rotate round an axis 411. By rotating this support grind 400 around this axis 411, the solar energy capturing units 110 are moveable between at least a first position, which is shown in figure 1, and a second position shown in figure 2. The angle α over which the support grid 400 may rotate, is usually limited to 90° maximum, but preferably in the range of 10° to 50°. By rotating the support grid 400, the solar energy capturing units 110 become inclined to the top plane 311 and bottom plane 312 and become accessible for sunlight caught above the top plane 311. A preferred angle α of 15° is used when the solar energy capturing units 110 are in their second position, as shown in figure 2. When the support grid 400 is in the first position, a spacer means 420 may be provided, for supporting the support grid 400 on the profile 210 at the opposite side of the hinges 410, and optionally holding, even detachably fixing the supporting grid 400 in a defined lying, resting position, such as the first position. This lying position is preferably a position where the solar energy capturing units 110 are about parallel to the top plane 311 and/or bottom plane 312. Alternatively, the support grid 400 itself is provided with a protrusion or a dedicated bar to provide this resting position. Optionally, (not shown in the figures) the supporting grid 400 is provided with a locking means to lock the supporting grid in the first position. As an example, at least one pair of fins, each fin having one or more perforations, may be provided, one on the lower side of the support grid 400 and the other on the profile 210. The fins may be provided such that these two fins are one near or adjacent the other and each fin having at least one perforation that is aligned with a perforation of the other fin. The two fins may be detachably fixed in their position, and hence by consequence the support grid 400 and the frame 200, e.g. by bolting them together with a bolt and nut, the bolt extending though two aligned perforations, or e.g. by using a clevis and a cotter pin, the clevis pin extending though two aligned perforations.

Optionally, (not shown in the figures) the supporting grid 400 is provided with hoisting means at the side of the support grid opposite to the hinged side. These hoisting means allow the side of the support grid opposite to the hinged side, to be lifted, thereby rotating around the axis of the hinges. As such the support grid, and hence the solar energy capturing units 110 may be brought from the first position in figure 1 and figure 3, to the inclined, second position in figure 2.

As shown in figure 2, the support grid 400 may be provided with studs 430. These studs 430 may be hingedly connected to the support frame, e.g. to the support beams 403. When the support grid 400 and hence the solar energy capturing units 110 are in the first position, the studs may be parallel to the support beams 403. When the support grid 400 and hence the solar energy capturing units 110 are brought to and/or positioned in the second position, the stud 430 rotates around the axis 431,suc that the studs outer end 432, oriented opposite to the outer end the hinge is connected to, is brought in contact with the profile 210. The support grid 400 and mobile solar energy capturing module 100 are supported in this second position by the studs carrying and bringing the load of these elements to the profile 210. In order to allow different angles α to be used for positioning the support grid 400 and the solar energy capturing units 110, the studs 430 may be adjustable in length.

The outer end 432 of the stud 430 may be positioned in a holding means 220 on the profile 210. This holding means may be e.g. two parallel fins, or a U-shaped beam support. The fins or sides of the holding means 220 may be provided with one or more pairs of aligned perforations. The outer end 432 of the stud may be provided with a perforation which is aligned with the perforations of the fins or sides of the holding means 220 when the outer end 432 is bought in the beam support or between the two fins. The two fins or the beam support and the stud 430 may be detachably fixed in position, e.g. by bolting them together with a bolt and nut, the bolt extending though the aligned perforations, or e.g. by using a clevis and a cotter pin, the clevis pin extending though the aligned perforations.

The studs 430, the support beams 402 and/or 403, additional beams 213, profiles 210, support frame 401, and any other contractual element of the module, may be provided as profiles, preferably closed profiles, and being provided as cold rolled steel profiles or hot rolled steel profiles. Connections are preferably provided by welding. The studs 430, the support beams 402 and/or 403, additional beams 213, and support frame 401 preferably are tubular steel profiles.

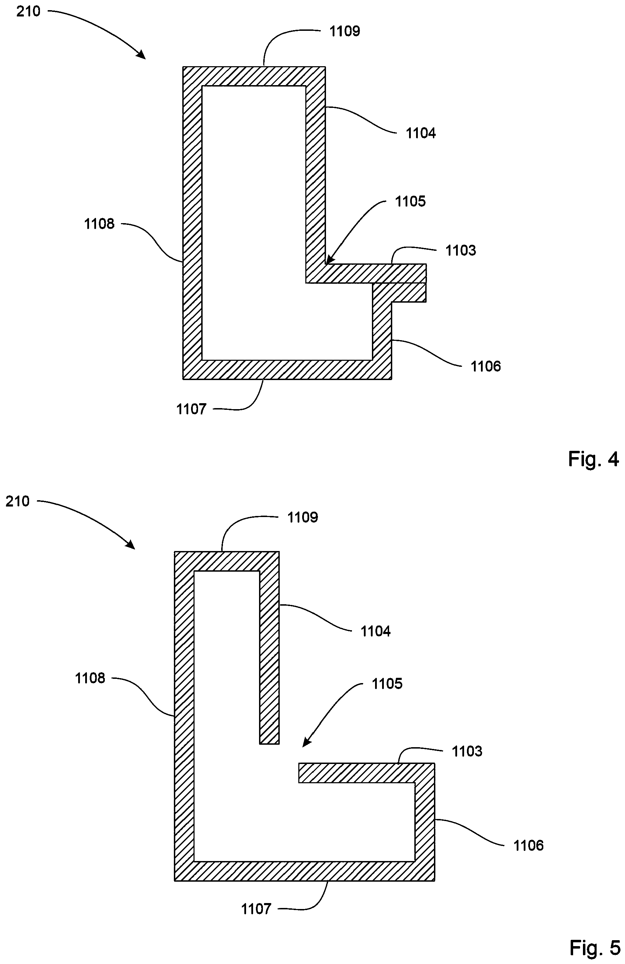

The profiles 210, as shown in figure 4, preferably are L-shaped, the L-shape being delimited by, in sequential order and in clockwise direction round the axis of the profile 210, a first flank 1103 (end to end about 1 to 20 cm) providing the upwards oriented lower side of the L-shape, a first outer flank 1106 (end to end about 1 to 20 cm) defining the end of the first leg of the L-shape, a third flank 1107 (end to end about 5 to 20 cm) providing the lower side of the profile, a fourth side 1108 (end to end about 5 to 20 cm) providing the outer side of the profile, a second outer flank 1109 (end to end about 5 to 20 cm) defining the end of the second leg of the L-shape and finally a second flank 1104 (end to end about 5 to 20 cm). Between each pair of consecutive flanks, a corner is provided, for which the smallest angle between the consecutive flanks being all about 90°. Between the first and second flank 1103 and 1104, an inwards the profile oriented corner 1105 is defined, where the first and second flank are connected one to the other. The outer end of the outer flank 1106 is provided with a small lip, being bended parallel to the first flank 1103. The outer flank 1106 and the first flank 1103 are welded to each other at one of the corners of the L-shape. As shown in figure 1 and 2, the flank 1109 provides the upper flank 211 of the profile 210. The flank 1107 provides the lower flank 212 of the profile 210. The flank 1103 is used to provide support to the support grid 400. The flank 1108 provides the outer flank 213 of the profile 210.

Figure 5 shown an alternative profile which may be used to provide the profile 210. The same reference signs refer to corresponding flanks and details as in figure 4. The profiles of figures 4 and 5 are identical in material, dimensions, have an L-shaped cross section which is an open profile. The profiles are a cold rolled profiles, made from a steel plate. The plate is rolled in such a way that the outer borders of the plate provide the endpoints of the first and second flank, these endpoints being oriented towards the corner 1105 these two flanks make. The first 1103 and second 1104 flank may remain separated at the corner 1105 and not interconnected, as such providing an open tubular cross section.

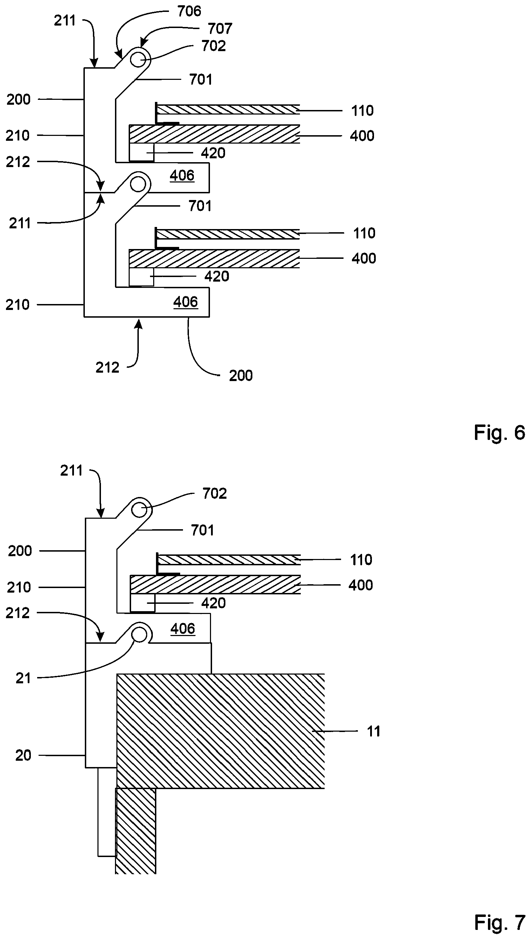

As shown in figure 6, the mobile solar energy capturing modules 100 may be stacked one to the other, e.g. on a loading surface of a trailer, with the support grid 400 and hence the solar energy capturing units 110 in the first position, i.e. positioned within the volume defined by the frame. By supporting the lower flank 212 of the profile 210 arranged higher, to the upper flank 211 of the profile 210 arranged higher, the solar energy capturing units 110 are snuggly fitting within the volume it is connected to and is prevented from contact with elements of higher or lower arranged modules.

The mobile solar energy capturing modules 100 may be provided with lifting means 701.

The lifting means 701, adapted to receive a hook of a lifting device or hoisting means for lifting the mobile solar energy capturing module 100, is provided in each corner or vertex of the frame 200. The lifting means 701 in this embodiment is provided as a metal plate or fin in which an opening or eye 702, is provided. The metal lifting means 701 is connected in each corner such the metal lifting means 701 bisects the angle of the corner or vertex. The lifting means extends above the upper flank 211 of the profile 210, but the extension is limited such that, when two mobile solar energy capturing modules 100 are placed one on top of the other, the lifting means does not touch the lower side of the support grid 400 and the solar energy capturing units 110. The lifting means extends above the upper flank 211 over a length (measured in height) being less than the height of the flank 1106. In general, lifting means, such as lifting means 701 extending above the upper flank 211 of the profile 210, but the extension is limited such that, when two mobile solar energy capturing modules 100 are placed one on top of the other, the lifting means does not touch the lower side of the support grid 400 and the solar energy capturing units 110, may prevent stacked mobile solar energy capturing module 10 to displace one in view of the other. In particular, shifting of stacked mobile solar energy capturing module 100 one in view of the other in the plane defined by the upper flank 211 and lower flank 212 is partially or completely avoided.

Hence the height of the flank 1106 of the frames 200 is large enough to provide a void space under the support grid 400 and the solar energy capturing units 110, which is adapted to receive the lifting means 701 of an identical or similar mobile solar energy capturing module 100 positioned under the mobile solar energy capturing module 100 it is part of.

The upper side 706 of the lifting means 701 is provided as a guiding curve, adapted to guide the corner of the frame 200 of the lifted mobile solar energy capturing module 100, to the corresponding position on the frame 200 of the lower mobile solar energy capturing module 100 having an identical lifting means 701 at its top side. The guiding curve is a continuous line, continuously decreasing in height from the top point 707 of the lifting means 701 towards the frame 200. This facilitates the mounting of identical or similar modules in a stacked configuration.

The lifting means may also be used to install the mobile solar energy capturing module 100 on a mobile building module 11 of a mobile work- or living space 1. The mobile building modules preferably have identical or similar profiles used to provide the roof profile of the building module. In figure 7, a building module 11 is shown, which is provided with a roof frame 20, possibly be provided from the same profiles as used for the frame 200. This building module has at its corners also lifting means 21, which may be similar or even identical in shape as the lifting means 701. In a similar way as is applicable for stacking two mobile solar energy capturing modules 100, the lifting means 21 of the mobile building module 11 has a guiding curve, adapted to guide the corner of the frame 200 of the lifted mobile solar energy capturing module 100, to the corresponding position on the frame 20 of the lower positioned mobile building module 11.

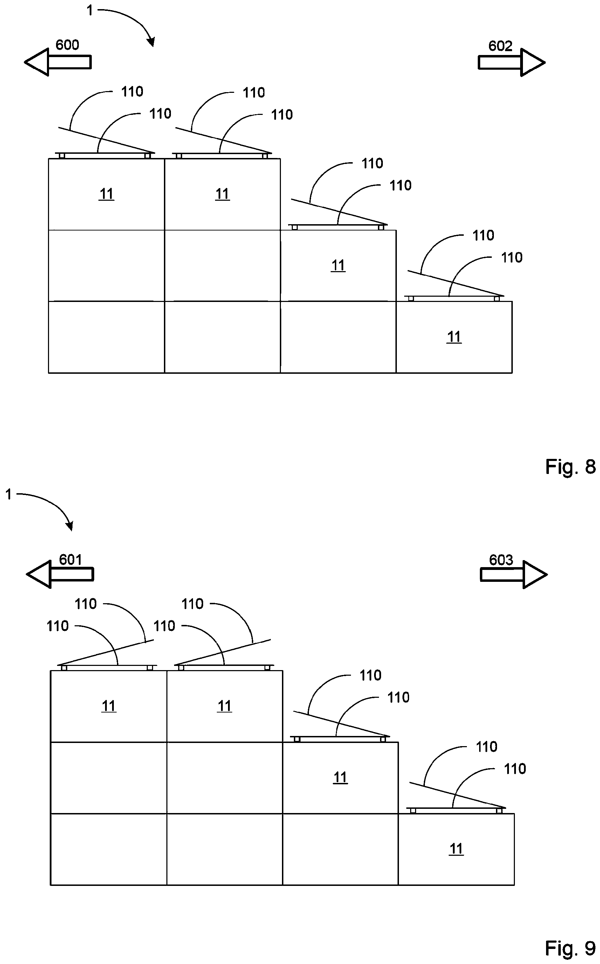

In figures 8 and 9, a mobile work- or living space 1 is shown comprising a lower level of four adjacent mobile building modules, a second level of three adjacent mobile building modules and a third, upper level of two adjacent mobile building modules. The mobile building modules are stacked one on top of the other. On some or each of the mobile building modules 11, being the upper building modules having a free roof, hence the mobile building modules 11 having no further mobile building module installed above them, a mobile solar energy capturing module 100 is provided.

Depending on the geographical orientation of the mobile work- or living space 1, the solar energy capturing units 110 of the mobile solar energy capturing module 100 may be oriented to capture as much sunlight during a day. The mobile building modules 11 preferably stacked such that for the roof surfaces of each of the mobile building modules 11 having a free roof, the roof surface of the adjacent mobile building module 11 in a direction to the closest side wall of the mobile work- or living space 1 is either on the same height or lower as compared to the roof surfaces of the mobile building modules 11 itself. Preferably a mobile solar energy capturing module 100 is provided to each mobile building module 11 having a free roof and for which the roof surfaces of the adjacent mobile building modules 11 in a direction to the closest side wall of the mobile work- or living space 1 are either on the same height or lower as compared to the roof surfaces of the mobile building modules 11 itself.

Depending on the geographical position of North (600), East (601), South (602) and West (603) relative to the direction of the axes 411 of rotation of the mobile solar energy capturing module 100, some or all solar energy capturing units 110 may be installed having a second position with the top surfaces of the solar energy capturing units 110 towards East (601), South (602) or West (603). When the axes 411 of rotation of the mobile solar energy capturing module 100 are oriented about east to west, as shown in figure 8, the mobile solar energy capturing module 100 are so positioned that the side of the frame where the axis 411 is positioned, is closest to the south. When the axes 411 of rotation of the mobile solar energy capturing modules 100 are oriented about north to south, as shown in figure 9, some, e.g. half, of the number of mobile solar energy capturing modules 100 are so positioned that the side of the frame 200 where the axis 411 is positioned, is closest to the east, the others having their axis 411 of rotation closest to the west. Preferably, if the mobile building module 11 has a side which is free, i.e. where no further mobile building module 11 is in contact with, the side of the frame 200 where the axis 411 is positioned, is closest to this free side.

It is understood that further elements, like electrical wiring and cabling, fluid lines for guiding fluid being heated by some or all the solar energy capturing units 110, pumps, converters, energy storage means to store the solar energy, e.g. an electrical battery and/or a boiler for storing heated water and alike may be provided in one or more of the building modules, or in a separate space of module.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A mobile solar energy capturing module suitable to be part of a mobile work- or living space, said module comprising one or more solar energy capturing units and a frame for holding said one or more solar energy capturing units, the frame defines a volume, the one or more solar energy capturing units being moveably fixed to said frame, said one or more solar energy capturing units are moveable between at least a first and a second position, the one or more solar energy capturing units, when being in their first position, are enclosed within said volume.

2. A mobile solar energy capturing module according to claim 1, wherein said one or more solar energy capturing units comprises one or more PV module or modules.

3. A mobile solar energy capturing module according to any one of the claims 1 to 2, wherein said one or more solar energy capturing units comprises one or more solar collector or collectors for heating liquid by sunlight.

4. A mobile solar energy capturing module according to any one of the claims 1 to 3, wherein the volume is a prism.

5. A mobile solar energy capturing module according to claim 4, wherein the volume is a right prism comprising at least three vertices at the top face of the prism and three vertices at the bottom face of the prism.

6. A mobile solar energy capturing module according to claim 5, wherein at least one vertices at the top face of the prism is provided with a lifting means.

7. A mobile solar energy capturing module according to any one of the claims 4 to 6, wherein the volume is a rectangular cuboid.

8. A mobile solar energy capturing module according to claim 7, wherein the rectangular cuboid volume is defined by four profiles defining four side faces of the rectangular cuboid.

9. A mobile solar energy capturing module according to any one of the claims 7 to 8, wherein the rectangular cuboid volume further comprises an open upper face, the frame comprises profiles having a first flank being coplanar with the open upper face.

10. A mobile solar energy capturing module according to any one of the claims 7 to 9, wherein the rectangular cuboid volume further comprises an open lower face, the frame comprises profiles having a second flank being coplanar with the open lower face.

11. A mobile solar energy capturing module according to any one of the claims 7 to 10, wherein the rectangular cuboid volume further comprises an open upper face and an open lower face, the frame comprises profiles having a first flank being coplanar with the open upper face and second flank being coplanar with the open lower face, said first and second flank being parallel, the first flank of the profile being adapted to contact the second flank of an profile of an identical mobile solar energy capturing module being stacked to said first flanks.

12. A mobile solar energy capturing module according to any one of the claims 1 to 11, wherein the frame comprises a profile having an L-shaped cross section.

13. A mobile solar energy capturing module according to claim 12, the L-shape being delimited by, in sequential order end in counter-clockwise direction round the axis of the profile, a first flank providing the downwards oriented lower side of the inwards oriented corner, a second flank defining the end of the first leg of the L-shape, a third flank provides the upper side of the profile, a fourth side providing the outer side of the profile, a fifth outer flank defining the end of the second leg of the L-shape and a sixth flank providing the sideways oriented lower side of the inwards oriented corner, the frame defines a volume being a right prism a top face and a bottom face, the third flank being coplanar with the top face and the fifth flank being coplanar with the bottom face

14. A mobile solar energy capturing module according to any one of the claims 1 to 13, wherein said solar energy capturing unit or units are rotatable around an axis coplanar to the one of the open faces of the frame and/or are rotatable around an axis perpendicular to the one of the open faces of the frame.

15. A mobile work- or living space comprising one or a plurality of upper building modules, being free of a building module positioned on top of said building module, at least one, possibly some or even all of said upper building modules being provided on its roof side with one mobile solar energy capturing module according to any one of the claims 1 to 14.
